# EUROPÄISCHE PATENTSCHRIFT

(11) **EP 2 187 086 B1**
(45) Veröffentlichungstag und Bekanntmachung des Hinweises auf die Patenterteilung: **11.01.2017**
(21) Anmeldenummer: 09014155.7
(22) Anmeldetag: 12.11.2009
(51) Int. Cl.: F16F 9/46, B62K 25/08

(54) **Federgabel**
Suspension fork
Fourche à ressort

(30) Priorität: 13.11.2008 DE 102008057269
(43) Veröffentlichungstag der Anmeldung: 19.05.2010
(73) Patentinhaber: DT Swiss AG, 2500 Biel/ Bienne 6 (CH)
(72) Erfinder: Achenbach, Martin, 2503 Biel (CH)
(74) Vertreter: BSB Intellectual Property Law

(56) Entgegenhaltungen:
- EP-A2- 0 322 608
- EP-A2- 1 006 046
- WO-A1-2008/079093
- WO-A1-2010/049524
- WO-A2-99/01333
- US-A- 4 972 928
- US-B2- 6 592 136

## Beschreibung

Die vorliegende Erfindung betrifft eine Federgabel für ein Fahrrad bzw. ein Dämpfungssystem für eine solche Federgabel.

Der Einsatz von Federgabeln an Fahrrädern ist grundsätzlich schon lange Zeit bekannt. Insbesondere als Teleskop-Federgabeln ausgeführte Federgabeln werden an Downhill- und Mountainbikes sowie an Cross-Country-Fahrrädern und zunehmend auch an Alltagsfahrrädern verbaut.

Federgabeln weisen meist zwei mit Bezug zum Rahmen des Fahrrads feststehende Rohre, die sogenannten Standrohre, und zwei untere bewegliche Rohre, die sogenannten Tauchrohre, auf, an denen die Nabe des Laufrades befestigt ist. Die Standrohre können durch eine Gabelbrücke oder Gabelkrone zusammengehalten werden, an denen in der Regel mittig das Gabelschaftrohr befestigt ist. Die Tauchrohre bzw. Gleitrohre weisen meist einen größeren Durchmesser auf, um die Standrohre in den Gleitrohren gleitverschieblich aufzunehmen.

Die Fahrer von mit Federgabeln ausgerüsteten Fahrrädern wünschen eine leichte und schnelle Einstellbarkeit der Feder- und Dämpfungseigenschaften der Federgabeln, um die aktuelle Charakteristik der Federgabel schnell an die jeweiligen Umgebungsbedingungen anpassen zu können.

Deshalb sind im Stand der Technik auch Federgabeln bekannt geworden, bei denen Einstellelemente vorgesehen sind. Beispielsweise offenbart die US 6,592,136 B2 eine Federgabel mit einer im unteren Bereich eines Tauchrohres vorgesehenen Ölkammer, welche durch einen beweglichen Kolben in zwei Teilkammern unterteilt ist. Die mit dem Kolben verbundene Kolbenstange ist am oberen Ende des Standrohres befestigt und ist hohl ausgebildet, um ein Durchführen eines Einstellmechanismus zu dem Kolben zu ermöglichen. Dieser Aufbau ist komplex und erfordert sehr lange und dünne Bauteile, um die Drosselung und Regelung der Dämpfung einzustellen.

Ein Nachteil einer solchen Konstruktion ist weiterhin, dass an dem Drosselventil zur Einstellung der Zugstufendämpfung und an dem Drosselventil zur Einstellung der Druckstufendämpfung im Betrieb eine erhebliche Wärmemenge entsteht, die durch das dabei erhitzte Öl in dem Tauchrohr verbreitet wird und sich im unteren Bereich sammelt. Außerdem ist bei diesem bekannten Stand der Technik das Drosselventil für die Zugstufe im unteren Bereich des Tauchrohrs angeordnet, sodass die bei der Drosselung in der Zugstufe entstehende Wärme sich im unteren Bereich des Tauchrohres sammelt. Ein Drosselventil für die Druckstufe ist oft am untersten Ende eines Tauchrohrs vorgesehen, sodass auch dessen Wärmeabgabe sich unten sammelt.

Darüber, dass sich das aufgeheizte Öl im unteren Bereich der Tauchrohre ansammelt und dadurch, dass dort auch das Drosselventil für die Zugstufe vorgesehen ist, wird im unteren Bereich des Tauchrohres die entstehende Wärme abgegeben, die zu einer größeren Aufheizung des Tauchrohrs im Vergleich zum Standrohr führt. Dadurch können sich unterschiedliche Wärmeausdehnungen der Tauchrohre und der Standrohre ergeben.

Vor dem Hintergrund des beschriebenen Standes der Technik ist es deshalb die Aufgabe der vorliegenden Erfindung, eine Federgabel zur Verfügung zu stellen, welche einen einfacheren Aufbau ermöglicht. Ein bevorzugter Aspekt der Aufgabe ist es eine Federgabel zur Verfügung zu stellen, welche eine verbesserte Wärmeabgabemöglichkeit aufweist.

Diese Aufgabe wird gelöst durch eine Federgabel mit den Merkmalen des Anspruchs 1. Bevorzugte Weiterbildungen der Erfindung sind Gegenstand der Unteransprüche. Weitere vorteilhafte Merkmale und Ausgestaltungen der Erfindung ergeben sich aus dem Ausführungsbeispiel.

Die erfindungsgemäße Federgabel ist für den Einsatz an einem Fahrrad vorgesehen und umfasst zwei Standrohre und zwei damit zusammenwirkende Tauchrohre und einen Radaufnahmeraum dazwischen. Weiterhin ist ein Dämpfungssystem vorgesehen, welches wenigstens eine durch einen beweglichen Kolben in eine erste Kammer und in eine zweite Kammer getrennte Dämpfungskammer an und insbesondere in einem Standrohr aufweist. Eine Drosseleinrichtung für die Zugstufendämpfung und eine Drosseleinrichtung für die Druckstufendämpfung sind vorgesehen. Dabei sind die Drosseleinrichtung für die Zugstufendämpfung und die Drosseleinrichtung für die Druckstufendämpfung oberhalb des beweglichen Kolbens und insbesondere oberhalb oder am oberen Ende der Dämpfungskammer angeordnet. Die erfindungsgemäße Federgabel hat viele Vorteile. Ein erheblicher Vorteil der erfindungsgemäßen Federgabel ist die Anordnung der Drosseleinrichtung für die Zugstufendämpfung und der Drosseleinrichtung für die Druckstufendämpfung oberhalb des beweglichen Kolbens. Dadurch erfolgt die bei der Drosselung auftretende Wärmeabgabe in einem Bereich oben an der oder oberhalb der Dämpfungskammer, sodass eine effektive Kühlung erfolgen kann. Da das Dämpfungssystem an oder sogar in einem Standrohr vorgesehen ist, welches mit dem Rahmen des Fahrrads verbunden ist, kann eine besonders einfache Einstellung der Dämpfungseigenschaften über ein Einstellelement z. B. an der Oberseite der Federgabel erfolgen.

Im Unterschied zum Stand der Technik werden lange und sehr dünne Bauteile nicht benötigt, um die Feder- und Dämpfungseigenschaften der erfindungsgemäßen Federgabel einzustellen.

Da die Drosseleinrichtungen für die Zugstufen- und die Druckstufendämpfung oberhalb der Dämpfungskammer an uns insbesondere in dem Standrohr vorgesehen sind, können mehrere auch nebeneinander platzierte Bedien- oder Einstellelemente eingesetzt werden, um die gewünschte Charakteristik der Federgabel einzustellen. Ein Ineinanderverschachteln mehrerer Bedienelemente in ein eng dimensioniertes und langes Rohr einer Kolbenstange ist bei der erfindungsgemäßen Federgabel nicht nötig.

Die Anzahl und die Anordnung der Steuer- und Regelelemente können an die jeweiligen Anforderungen angepasst werden. Die Anordnung muss nicht konzentrisch zueinander erfolgen, sondern einzelne Elemente können auch nebeneinander platziert werden.

Ein bevorzugter Aspekt der Erfindung ist es, das Dämpfungsmedium zur Drosselung nach oben zu leiten, damit dort die Wärmeabgabe entsteht. Außerdem können dann in dem oberen Bereich die Einstellelemente flexibel angeordnet werden.

Insbesondere sind die Drosseleinrichtungen für die Zugstufendämpfung und die Druckstufendämpfung oberhalb der Dämpfungskammer befestigt.

Wenigstens eine Drosseleinrichtung kann als einstellbares Drosselventil ausgebildet sein. Dabei kann die Drosseleinrichtung für die Zugstufendämpfung und/oder die Drosseleinrichtung für die Druckstufendämpfung als einstellbares Drosselventil ausgebildet sein. Die jeweilige Einstellung kann manuell oder automatisch gesteuert werden.

Vorzugsweise werden zwei voneinander beabstandete Standrohre und zwei damit zusammenwirkende Tauchrohre, sowie wenigstens ein die beiden Standrohre oberhalb des Radaufnahmeraums verbindendes Verbindungsteil vorgesehen.

An dieser Stelle wird darauf hingewiesen, dass vorzugsweise das Verbindungsteil der beiden voneinander beabstandeten Standrohre als separate Gabelkrone oder aber einstückig mit den Standrohren ausgebildet sein kann. Auch mehrere Verbindungsteile oder Gabelkronen oder dergleichen können vorgesehen sein.

Gemäß einer Weiterbildung der Erfindung ist ein Steuerabschnitt oberhalb der Dämpfungskammer vorgesehen, an welchem die Drosseleinrichtung für die Zugstufendämpfung bzw. das Drosselventil zur Einstellung der Zugstufendämpfung und die Drosseleinrichtung für die Druckstufendämpfung bzw. das Drosselventil zur Einstellung der Druckstufendämpfung angeordnet sind. Der Steuerabschnitt kann beispielsweise als separate Baueinheit ausgebildet sein, an dem die Drosseleinrichtungen oder Drosselventile vorgesehen oder anmontiert sind. Der Steuerabschnitt kann dabei auch die obere Begrenzung der Dämpfungskammer darstellen oder eine solche bilden oder daran angeschlossen sein.

Insbesondere ist der Steuerabschnitt in der Nähe des oberen Endes eines Standrohres angeordnet. Vorzugweise kann das obere Ende des Steuerabschnitts den oberen Abschluss des Standrohres bilden, sodass das obere Ende des Steuerabschnitts aus der Gabelkrone hervorsteht oder daran zugänglich ist.

Dadurch werden eine besonders einfache Einstellbarkeit und ein einfacher Aufbau der erfindungsgemäßen Federgabel ermöglicht. Der Steuerabschnitt mit den Drosseleinrichtungen oder einstellbaren Drosselventilen zur Einstellung der Zugstufendämpfung und der Druckstufendämpfung befindet sich in dieser Ausgestaltung am oberen Ende des Standrohres und ragt aus dem Standrohr nach oben hervor bzw. ist von oben zugänglich.

Dadurch kann eine direkte Bedienung bzw. Einstellung der Drosselventile zur Einstellung der Zugstufendämpfung und der Druckstufendämpfung erfolgen. Das kann der Fahrer eines mit solch einer Federgabel ausgerüsteten Fahrrads während des Fahrbetriebs erledigen, sodass durch eine Einstellung der Dämpfungscharakteristik der Federgabel sonst eventuell nötige Stopps vermieden werden können. Die Bedienung kann auch über einen Fernschalter erfolgen, der z. B. am Lenker angeordnet wird und über einen Seilzug oder dergleichen mit dem Einstellelement oder mit mehreren Einstellelementen verbunden ist.

Wenigstens ein Steuer- oder Sperrventil kann in der oberen Begrenzung der Dämpfungskammer integriert oder dort angeordnet sein. Werden die oder doch wenigstens einige Ventile dort am oberen Ende der Dämpfungskammer angeordnet bietet das auch den Vorteil, dass sicher gestellt ist, dass die Ventile im Normalfall mit dem Dämpfungsfluid bedeckt sind. Wenn neben Dämpfungsfluid auch Luft angesaugt würde, könnte das Dämpfungsfluid aufschäumen und einen Teil seiner Wirkung verlieren.

Um ein Aufschäumen zuverlässig zu verhindern, wird in einer Weiterbildung das Dämpfungsmedium vollständig von Luft getrennt. Dazu wird insbesondere oberhalb der Dämpfungskammer eine flexible Trennwand vorgesehen, der das Dämpfungsfluid vollständig und dicht gegen Luft oder ein sonstiges kompressibles Medium und insbesondere Gas abdichtet. Die flexible Trennwand kann als flexibler Schlauch ausgebildet sein und kann z.B. aus Gummi oder einem gummiähnlichen Material bestehen. Die flexible Trennwand ermöglicht einen Volumenausgleich beim Einfedern bzw. Ausfedern, da das Volumen der Kolbenstange verdrängt werden muss. Vorzugsweise wird das Gasvolumen unter einen Druck von einigen bar Überdruck gesetzt.

Die Ventile im Bereich der oberen Dämpfungskammer sind insbesondere über Steuerstifte oder sonstige Steuerelemente mit dem oberen Ende der Standrohre verbunden, um ein einfaches Einstellen der Dämpfungseigenschaften zu ermöglichen.

Vorzugsweise ist der bewegliche Kolben über eine Kolbenstange mit dem zugeordneten Tauchrohr insbesondere fest verbunden.

Durch die Einstellmöglichkeiten der Dämpfungscharakteristik der Federgabel an dem Steuerabschnitt oberhalb der Dämpfungskammer bedingt, kann die Kolbenstange erheblich einfacher ausgebildet werden, als es im Stand der Technik der Fall ist. Im einfachsten Fall kann die Kolbenstange als massive oder hohl ausgeführte Stange ausgebildet sein, die eine starre Verbindung zwischen dem Kolben und dem Tauchrohr zur Verfügung stellt.

In einer Weiterbildung der Erfindung sind die Charakteristiken des Drosselventils zur Einstellung der Zugstufendämpfung und des Drosselventils zur Einstellung der Druckstufendämpfung im Betrieb über Einstellelemente einstellbar.

Vorzugsweise ist zusätzlich zu den Drosseleinrichtungen und/oder Drosselventilen zur Einstellung der Zugstufendämpfung und der Druckstufendämpfung weiterhin wenigstens ein High-Speed-Drosselventil für die Zugstufendämpfung und/oder die Druckstufendämpfung vorgesehen. Dabei ist die Charakteristik eines solchen High-Speed-Drosselventils insbesondere festeingestellt. Beispielsweise kann ein High-Speed-Drosselventil durch eine Feder, wie z. B. eine Spiralfeder, definiert vorbelastet werden. Übersteigt der anliegende Druck nun die Federkraft, öffnet das High-Speed-Drosselventil, um bei plötzlich auftretenden starken Schlägen eine adäquate Dämpfung zu ermöglichen.

Zusätzlich zu einem High-Speed-Drosselventil oder an Stelle eines solchen kann ein Blowoff-Ventil vorgesehen sein, welches bei plötzlich auftretenden besonders starken Belastungen oder bei geschlossenem Sperrventil öffnet, um einen zur Zerstörung des Dämpfungssystems führenden Überdruck im System zu vermeiden.

An dieser Stelle sei darauf hingewiesen, dass die Drosselventile zur Einstellung der Druck- und Zugstufenstufendämpfung als Low-Speed-Drosselventile ausgebildet sind, die zur Regelung der Dämpfungseigenschaften im normalen Fahrbetrieb dienen, um Bodenwellen, kleinere Steine und Schläge und dergleichen entsprechend abzudämpfen.

In bevorzugten Weiterbildungen ist wenigstens ein Sperrventil vorgesehen, um die Zugstufe und/oder die Druckstufe gegebenenfalls zu aktivieren bzw. zu blockieren. Dazu ist ein Einstellelement oder Einstellteil vorgesehen, welches insbesondere in der Nähe des oberen Endes des Standrohres vorgesehen und dort einstellbar ist, um den Weg durch das Sperrventil wahlweise entweder freizugeben oder zu verschließen.

Ein Sperrventil für die Zugstufe ist beispielsweise wünschenswert, wenn der Fahrer einen steilen Berg oder eine starke Steigung hochfährt und die Federgabel einfedern soll, damit der Neigungswinkel des Fahrers bzw. des Fahrrads geringer wird, als bei ausgefederter Federgabel. Dadurch kann der Fahrer den Gesamtschwerpunkt weiter nach vorne bringen und verringert das Empfinden bzw. die Gefahr des rückwärtigen Überschlags. In einer solchen Situation ist es gewünscht, dass die Federgabel nicht im Laufe des Betriebs wieder ausfedert, bis der maximale Federweg erreicht wird. Für eine solche Einstellung ist die Aktivierung eines Sperrventils sinnvoll und bevorzugt.

In allen zuvor beschriebenen Ausgestaltungen besteht das oder es bestehen die Tauchrohre vorzugsweise wenigstens teilweise aus einem Faserverbundwerkstoff, wodurch das Gewicht verringert wird. Vorzugsweise besteht wenigstens ein Standrohr wenigstens teilweise aus Metall, was die Wärmeabgabe erhöht. Durch eine Ausgestaltung, bei der wenigstens ein Standrohr aus Metall und wenigstens ein Tauchrohr aus einem Faserverbundwerkstoff bestehen, wird in vorteilhafter Weise eine effiziente Wärmeabgabe durch die erfindungsgemäße Federgabel ermöglicht.

Bei einer solchen Ausgestaltung ergibt sich noch ein weiterer erheblicher Vorteil durch die weit oben erfolgende Wärmeabgabe. Die Standrohre aus einem Metall oder einer Metalllegierung geben die entstehende Wärme oben ab, während die Tauchrohre aus einem Faserverbundwerkstoff nicht oder nur gering erwärmt werden. Dadurch spielen die durch die verschiedenen Materialien bedingten unterschiedlichen Wärmeausdehnungskoeffizienten der Standrohre und der Tauchrohre keine Rolle.

In anderen Ausgestaltungen können die Tauchrohre und/oder die Standrohre auch aus Magnesium oder einer Magnesiumlegierung oder einer sonstigen Metalllegierung bestehen.

Vorzugsweise bildet die Dämpfungskammer eine Innenkammer, die von einer Außenkammer wenigstens teilweise umgeben ist.

Insbesondere ist die Dämpfungskammer als Hochdruckkammer ausgebildet und der Steuerabschnitt weist eine Niederdruckkammer auf, in welche die Drosselventile das gedrosselte Fluid einleiten. Als Dämpfungsfluid wird vorzugsweise Öl eingesetzt. Auch andere Fluide sind möglich.

In allen Ausgestaltungen ist es bevorzugt, dass an dem Steuerabschnitt eine Steigleitung für die Druckstufe und eine Steigleitung für die Zugstufe vorgesehen sind, welche zu den entsprechenden Ventilbereichen bzw. den Drosselventilen führen.

In bestimmten Fällen umgibt die Niederdruckkammer die Steigleitung für die Druckstufe und/oder die Steigleitung für die Zugstufe. Dadurch wird erzielt, dass die Niederdruckkammer radial weiter außen angeordnet ist und insbesondere an die äußere Wandung des Standrohres angrenzt bzw. dadurch abgeschlossen oder begrenzt wird. Dadurch wird eine besonders effektive Wärmeabgabe nach außen ermöglicht.

In allen Ausgestaltungen grenzt die erste Kammer vorzugsweise an den Steuerabschnitt an und die zweite Kammer ist über einen Rückkanal und den Steuerabschnitt mit der ersten Kammer verbunden, sodass ein Kreislauf des Dämpfungsmediums gegeben ist.

Der Rückkanal bildet insbesondere die Außenkammer, die vorzugsweise die Innenkammer radial umgibt. Das bedeutet, dass die Außenkammer insbesondere an die Innenwandung des Standrohres wenigstens abschnittsweise angrenzt. Dabei kann in einem unteren Bereich der zweiten Kammer die Innenkammer von einem Zwischenrohr umgeben sein, welche wiederum von der Wandung des Standrohres umgeben ist. Der Zwischenraum zwischen der Wandung der zweiten Kammer und des Zwischenrohres bildet an dieser Stelle die Außenkammer, sodass sich dort eine thermische Isolierung durch einen luftgefüllten Ringspalt zwischen der Außenkammer und der Wandung des Standrohres in dem unteren Bereich der zweiten Kammer ergibt. Dadurch wird sicher gestellt, dass in dem unteren Bereich des Standrohres die dort vorhandene Wärme in dem Dämpfungsmedium nicht oder nur zu einem geringen Teil an das Tauchrohr abgegeben wird, welches das Standrohr umgibt.

Bei Einsatz von Öl als Dämpfungsfluid bilden die Außenkammer eine äußere Ölkammer und die Innenkammer eine innere Ölkammer.

Ein erheblicher Vorteil der Federgabel ist, dass das Dämpfungsmedium direkt an die Wandung des Standrohres grenzt. Das erhitzte Dämpfungsmedium kontaktiert die Wandung und kann somit direkt die entstehende Wärme nach außen abgeben. Dazu kann die Standrohrinnenseite wenigstens abschnittsweise als eine Kontaktfläche für das Dämpfungsmedium dienen. Eine aus Metall bestehende oder Metallpartikel umfassende Wandung sorgt für eine hohe Wärmeleitfähigkeit, sodass ein verbesserter Wärmeabtransport erfolgt. Die Wärmeabgabe erfolgt direkt von der Dämpfungskammer an das Standrohr. Wärmeisolierende Teile sind im oberen Bereich nicht vorhanden.

Das erfindungsgemäße Dämpfungssystem ist für den Einsatz an einer Federgabel eines Fahrrads vorgesehen und ist dazu strukturiert, in ein Standrohr eine Federgabel eingesetzt zu werden. Das Dämpfungssystem umfasst eine durch einen beweglichen Kolben in eine erste Kammer und eine zweite Kammer geteilte Dämpfungskammer. Drosseleinrichtungen sind für die Zugstufendämpfung und für die Druckstufendämpfung vorgesehen. Dabei weist das Dämpfungssystem im bestimmungsgemäßen Einbau oberhalb der Dämpfungskammer einen Steuerabschnitt auf, an dem wenigstens eine der Drosseleinrichtungen für die Zugstufendämpfung und wenigstens eine der Drosseleinrichtungen für die Druckstufendämpfung vorgesehen sind. Die Außenabmessungen des Dämpfungssystems sind dafür vorgesehen, in ein Standrohr einer Federgabel eingesetzt zu werden.

Auch das erfindungsgemäße Dämpfungssystem hat viele Vorteile. Durch das erfindungsgemäße Dämpfungssystem werden ein einfacher Aufbau und eine einfache Einstellbarkeit der Dämpfungseigenschaften ermöglicht. Gleichzeitig wird eine einfache Kühlbarkeit ermöglicht, da die bei der Drosselung entstehende Wärme im oberen Bereich des Dämpfungssystems entsteht und dort vereinfacht nach außen abgeführt werden kann.

Bevorzugterweise wird das Dämpfungssystem an einer Federgabel mit der Right-Side-Up-Bauform verwendet, bei der die in der Gabelbrücke der Federgabel befestigten Standrohre in die Tauchrohre mit größerem Durchmesser eintauchen. Möglich ist der Einsatz auch an anderen Federgabeln.

In allen Ausgestaltungen und Weiterbildungen ist das wenigstens eine Tauchrohr vorzugsweise zum gleitenden Kontakt mit dem entsprechenden Standrohr der Federgabel vorgesehen. Vorzugsweise wird das Standrohr oder es werden die Standrohre mittels Gleitlagern in den Tauchrohren gelagert.

In allen Ausgestaltungen ist vorzugsweise an den unteren Enden der Tauchrohre jeweils ein Ausfallende angeordnet, welche insbesondere zur Aufnahme eines Laufrades vorgesehen sind.

Weitere Vorteile und Anwendungsmöglichkeiten der vorliegenden Erfindung ergeben sich aus der Beschreibung von Ausführungsbeispielen, die nun mit Bezug auf die beiliegenden Figuren erläutert werden.

In den Figuren zeigen:
- Fig. 1: eine Vorderansicht einer erfindungsgemäßen Federgabel;
- Fig. 2: eine geschnittene Seitenansicht gemäß A-A der Federgabel aus Fig. 1;
- Fig. 3: eine geschnittene vergrößerte Seitenansicht der Federgabel in der Druckstufe;
- Fig. 4: eine geschnittene Seitenansicht der Federgabel in der Zugstufe;
- Fig. 5: den Steuerabschnitt des Dämpfungssystems der Federgabel nach Fig. 3 in der Druckstufe in vergrößerter Darstellung;
- Fig. 6: den Steuerabschnitt des Dämpfungssystems der Federgabel nach Fig. 4 in der Zugstufe in vergrößerter Darstellung;
- Fig. 7: den Steuerabschnitt des Dämpfungssystems der Federgabel nach Fig. 1 mit dem Einstellhebel in der ersten Umschaltstufe;
- Fig. 8: den Steuerabschnitt des Dämpfungssystems der Federgabel nach Fig. 1 mit dem Einstellhebel in der zweiten Umschaltstufe;
- Fig. 9: einen vergrößerten Querschnitt durch ein Standrohr im oberen Bereich;
- Fig. 10: einen vergrößerten Querschnitt durch ein Standrohr im Bereich der Überströmöffnung;
- Fig. 11: die Federgabel nach Fig. 1 bei gesperrter Zugstufe beim Einfedern;
- Fig. 12: die Federgabel aus Fig. 1 bei gesperrter Zugstufe nach starker Einfederung;
- Fig. 13: die Federgabel aus Fig. 1 bei gesperrter Zugstufe und anschließendem langsamen Ausfedern;
- Fig. 14: eine vergrößerte Darstellung eines Querschnitts des Steuerabschnitts einer weiteren Federgabel;
- Fig. 15: einen weiteren Querschnitt durch den Steuerabschnitt der Federgabel nach Fig. 14; und

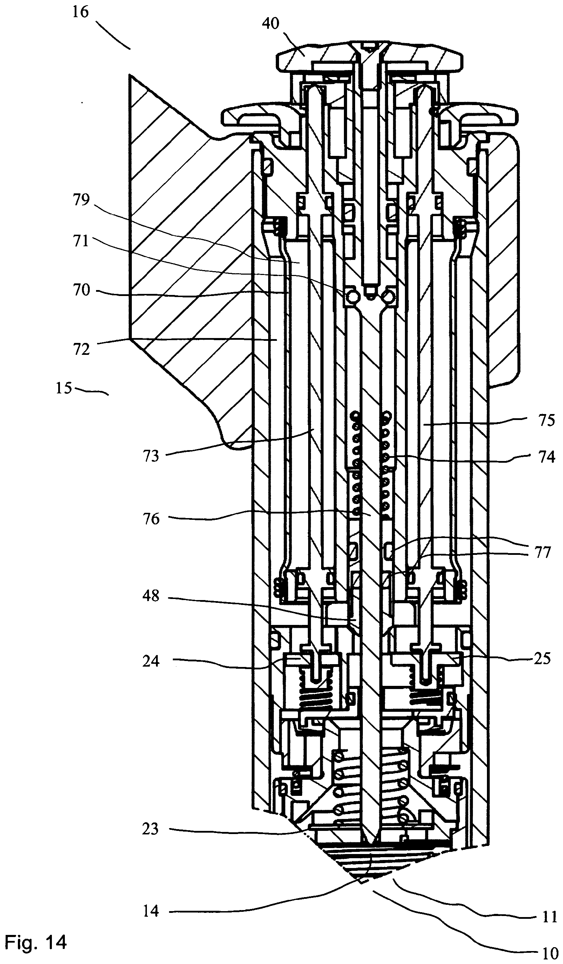

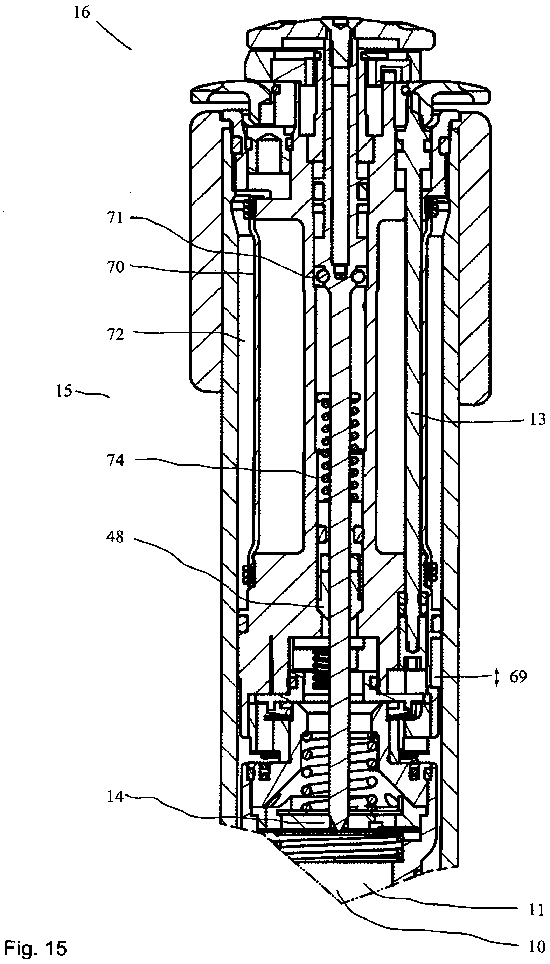

- Fig. 15: einen vergrößerten Querschnitt der Federgabel nach Fig. 14 mit dem beweglichen Kolben.

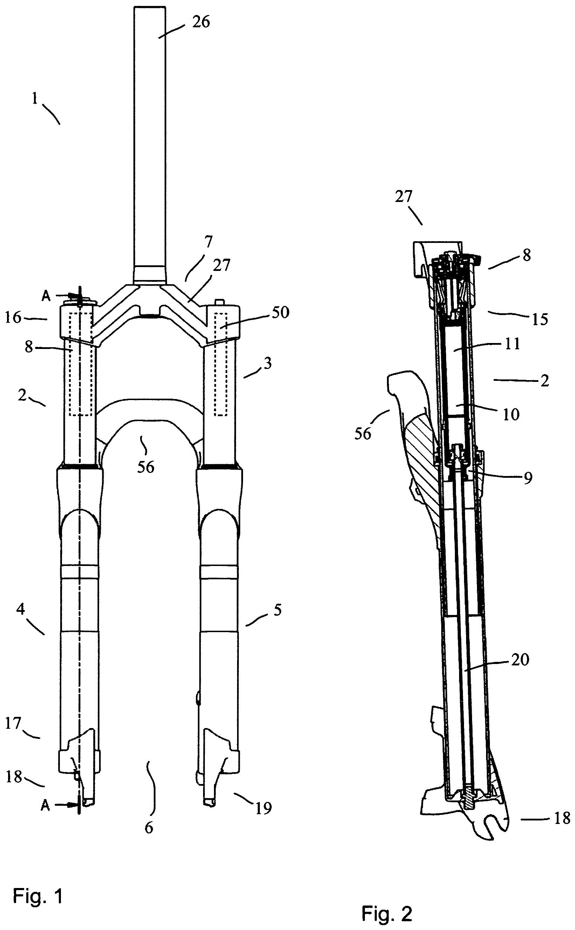

In den Fig. 1 bis 13 ist ein erstes Ausführungsbeispiel der erfindungsgemäßen Federgabel 1 in teilweise stark schematischen Ansichten dargestellt. Um die Übersichtlichkeit zu wahren und die Funktion besser erklären zu können, wurden einzelne Teile und Komponenten weggelassen.

Die in Fig. 1 in einer Vorderansicht dargestellte Federgabel 1 für ein hier nicht dargestelltes Fahrrad weist im oberen Bereich einen Gabelschaft 26 auf, der an ein als Gabelkrone 27 ausgeführtes Verbindungsteil 7 mittig angeschlossen ist, um die Gabel drehbeweglich an dem Rahmen des Fahrrads zu befestigen.

An den beiden Enden der Gabelkrone 27 sind Standrohre 2 und 3 an der Gabelkrone 27 befestigt. In dem Standrohr 2 ist ein Dämpfungssystem 8 angeordnet und in dem Standrohr 3 ist ein Federsystem 50 vorgesehen. Möglich ist es auch, in ein Standrohr 2 oder 3 das Dämpfungssystem 8 und auch das Federsystem 50 einzubauen. Mit dem Dämpfungssystem 8 und dem Federsystem 50 erhält die Federgabel 1 die gewünschten Feder- und Dämpfungseigenschaften.

Schiebbeweglich an den Standrohren 2 und 3 ist eine Tauchrohreinheit vorgesehen, die Tauchrohre 4 und 5 umfasst, die über wenigstens einen Verbindungsbügel 56 miteinander verbunden sind. Die Tauchrohreinheit kann aus mehreren Einzelteilen bestehen, kann aber auch einstückig gefertigt sein.

Zwischen den beiden Tauchrohren 4 und 5 bzw. zwischen den Standrohren 2 und 3 ist der Radaufnahmeraum 6 vorgesehen. Ein hier nicht dargestelltes Rad kann an den Ausfallenden 18 und 19 der Tauchrohre 4 und 5 am unteren Ende 17 der Federgabel 1 befestigt werden.

Am oberen Ende 16 ist in das Standrohr 2 ein Dämpfungssystem 8 integriert, wie insbesondere Fig. 2 entnommen werden kann.

Das Dämpfungssystem 8 umfasst eine Dämpfungskammer 10, die durch einen beweglichen Kolben 9 in eine obere erste Kammer 11 und eine untere zweite Kammer 12 geteilt wird. Oberhalb der Dämpfungskammer 10 ist ein Steuerabschnitt 15 vorgesehen, der gleichzeitig den oberen Abschluss der Dämpfungskammer 10 bildet. Der bewegliche Kolben 9 ist hier als geschlossener Pumpkolben ausgebildet. Ein Durchfluss durch den beweglichen Kolben 9 ist im Regelfall nicht möglich. Wenn der Kolben bewegt wird, muss von der oberen oder ersten Dämpferkammer 11 ein äußerer Rückfluss zur unteren oder zweiten Dämpferkammer 12 erfolgen.

Die Dämpfungskammer 10 mit der ersten Kammer 11 und der zweiten Kammer 12 ist als Hochdruckkammer 29 ausgebildet, während in dem Steuerabschnitt 15 eine Niederdruckkammer 32 vorgesehen ist.

In dem Steuerabschnitt 15 sind eine Drosseleinrichtung 57 für die Zugstufendämpfung und eine Drosseleinrichtung 58 für die Druckstufendämpfung vorgesehen. Hier ist die Drosseleinrichtung 57 als einstellbares Drosselventil 13 zur Einstellung der Zugstufendämpfung und die Drosseleinrichtung 58 als einstellbares Drosselventil 14 zur Einstellung der Druckstufendämpfung vorgesehen. Weiterhin sind ein Sperrventil 24 für die Zugstufe, ein Sperrventil 25 für die Druckstufe und High-Speed-Drosselventile 22, 23 für die Zugstufe und die Druckstufe sowie ein Blowoff-Ventil 48 vorgesehen.

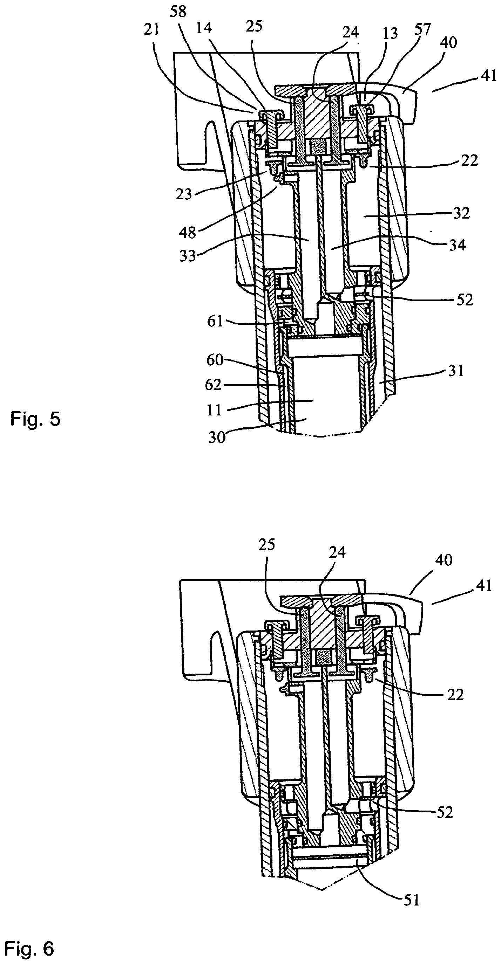

An dem oberen Ende der ersten Kammer 11 der Dämpfungskammer ist ein Rückschlagventil 51 angeordnet, welches durch eine nicht näher dargestellte Feder in die geschlossene Stellung vorbelastet ist, in der das Rückschlagventil 51 die direkte Strömungsverbindung zur Niederdruckkammer 32 verschließt. Das Rückschlagventil 51 öffnet, wenn in der Zugstufe die erste Kammer einen relativen Unterdruck aufweist (vgl. Fig. 6).

Ein Rückschlagventil 52 ist vorgesehen, welches durch eine ebenfalls nicht näher dargestellte Feder in die geschlossene Stellung vorbelastet ist. Das Rückschlagventil 52 wird geöffnet, wenn in der Druckstufe die zweite Kammer 12 einen relativen Unterdruck aufweist (vgl. Fig. 5) und das Dämpfungsfluid aus der Niederdruckkammer 32 über den Rückkanal 35 und die Außenkammer 31 in die zweite Kammer 12 gesaugt wird.

In der Zugstufe wird das aus dem Rückkanal 35 der Steigleitung 34 zugeführte Dämpfungsmedium durch das Drosselventil 13 in die Niederdruckkammer 32 eingeleitet. Im Druckstufenfall wird das aus der ersten Kammer 11 in den Steigkanal 33 eingeleitete Dämpfungsmedium über das Drosselventil 14 in die Niederdruckkammer 32 eingeleitet. Dabei tritt das Dämpfungsfluid in der Druckstufe von der ersten Kammer 11, die Teil der Innenkammer 30 ist, über die Steigleitung 33 in den Steuerabschnitt 15 ein. Je nach Stellung des Drosselventils 14 zur Einstellung der Druckstufendämpfung und nach auftretender Belastung wird das Dämpfungsfluid durch das Drosselventil 14 und/oder durch das High-Speed-Drosselventil 23 in die Niederdruckkammer 32 eingeleitet.

Im Zugstufenfall tritt das Dämpfungsfluid aus der zweiten Kammer 12 im unteren Bereich des Dämpfungssystems 8 in die als Hochdruckkammer ausgeführte Außenkammer 31 ein, die im unteren Bereich 36 der zweiten Kammer 12 durch die Außenwandung des Standrohres 2 und durch ein Zwischenrohr 37 begrenzt wird, welches das Standrohr 2 im unteren Bereich 36 der zweiten Kammer 12 radial umgibt. Dadurch wird eine thermische Isolierung zu dem Tauchrohr 4 bewirkt, welches im unteren Bereich 36 der zweiten Kammer 12 das Standrohr 2 umgibt, sodass eine Erwärmung des Tauchrohres 4 im unteren Bereich weitgehend vermieden wird.

Je nach auftretenden Belastungen gleitet der bewegliche Kolben 9 innerhalb der Dämpfungskammer 10 nach oben und unten, wobei eine Abdichtung radial nach außen zu der Innenkammer 30 über eine Dichtung 49 erfolgt.

Die Drosselventile 13 und 14 sind hier im Ausführungsbeispiel über Einstellelemente 21 verstellbar angeordnet. Die Einstellelemente 21 können hier als Schraubköpfe 28 ausgebildet sein, wobei durch Drehung des Einstellelementes 21 das Drosselventil 13 bzw. 14 weiter in die obere Abschlusswandung des Steuerabschnitts 15 eingeführt wird. Dadurch werden Schlitze oder radiale Bohrungen 54 bzw. 55 entsprechend weiter geöffnet oder weiter geschlossen, über die das Dämpfungsöl in der Druckstufe bzw. Zugstufe geleitet wird. Damit ist über eine Drehbewegung der Einstellelemente 21 der Drosselventile 13 bzw. 14 eine effektive Einstellung der Dämpfungswirkung der Zugstufe und der Druckstufe jeweils getrennt voneinander möglich. Diese Einstellung der Dämpfungswirkung erfolgt insbesondere für den normalen Betrieb, in dem die Federgabel auf die Dämpfung von kleineren bis mittleren oder auch größeren Stößen eingestellt ist.

Um eine Dämpfung auch bei besonders starken Stößen zu gewährleisten, sind die High-Speed-Drosselventile 22 und 23 für die Zugstufe bzw. die Druckstufe vorgesehen. Die High-Speed-Drosselventile 22 und 23 sind im Normalfall nicht einstellbar vorgesehen, obwohl auch das möglich ist.

Hier im Ausführungsbeispiel sind Vorbelastungseinrichtungen vorgesehen, die beispielsweise als Spiralfedern ausgebildet sind, um die jeweiligen High-Speed-Drosselventile 22 und 23 in die geschlossene Stellung vorzubelasten. Wenn nun besonders starke Stöße auftreten, steigt der Druck in der Dämpfungskammer entsprechend an, sodass die Kraft der jeweiligen Vorbelastungseinrichtung überwunden wird und das jeweilige High-Speed-Drosselventil 22 bzw. 23 öffnet. Das führt dazu, dass bei entsprechend starken Belastungen die Ventile öffnen.

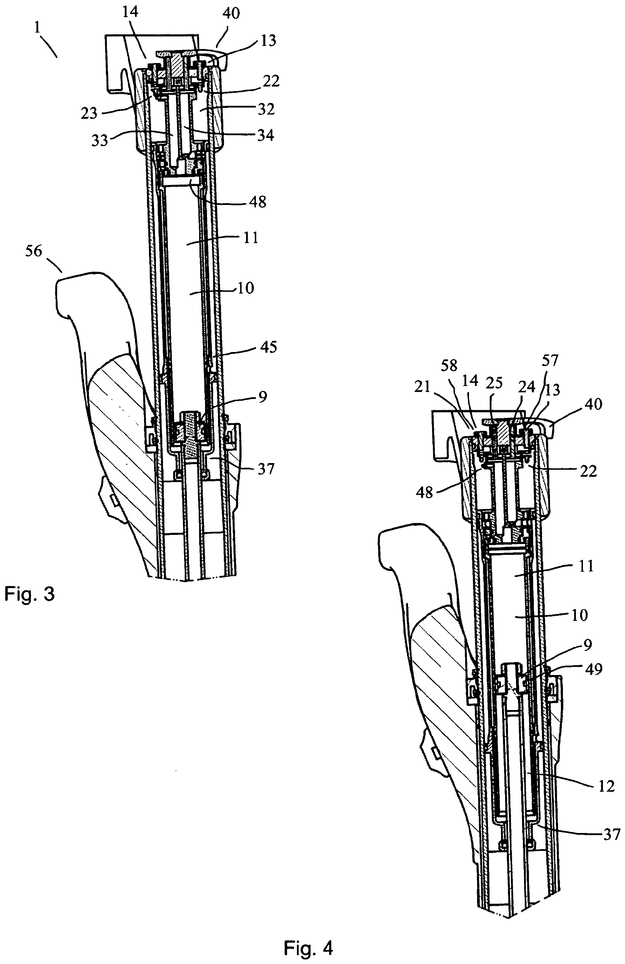

In Fig. 3 ist das Einfedern in der Druckstufe dargestellt, wobei Fig. 5 die Stellung der einzelnen Ventile in vergrößerter Darstellung zeigt. In Fig. 4 ist hingegen das Ausfedern in der Zugstufe dargestellt, wobei Fig. 6 die Stellung der Ventile vergrößert darstellt.

Deutlich erkennbar ist in den Fig. 3 bis 6, dass die Sperrventile 24 und 25 jeweils geöffnet sind, während die Drosselventile 13 und 14 je nach Betriebszustand geöffnet oder geschlossen dargestellt sind.

Wie insbesondere der Darstellung gemäß Fig. 3 entnommen werden kann, befindet sich im Abstand 46 vom unteren Ende der Dämpfungskammer 10 eine Überstromöffnung 45, welche ein Austreten des Dämpfungsfluids aus der zweiten Kammer 12 auch dann erlaubt, wenn das Sperrventil 24 für die Zugstufe geschlossen ist, bis der Kolben 9 die Überströmöffnung 45 hier von oben kommend verschließt.

Die Sperrventile 24 und 25 für die Zugstufe und die Druckstufe dienen dazu eine Dämpfung in der Zugstufe bzw. in der Druckstufe wahlweise zu unterbinden. Eine Dämpfung kann durch Aktivierung eines der Ventile unterbunden werden, wodurch der Durchflusskanal für die Zugstufe oder die Druckstufe entsprechend verschlossen wird.

Ein erheblicher Vorteil der dargestellten Ausführungsform ist, dass ein gemeinsamer Einstellhebel 40 als Einstellelement 21 vorgesehen ist, mit dem das Sperrventil 24 der Zugstufe und auch das Sperrventil 25 der Druckstufe gezielt und wahlweise gemeinsam aktivierbar sind.

Dazu ist der Einstellhebel 40 verschwenkbar an dem oberen Ende 16 des Steuerabschnitts 15 angeordnet, sodass der Einstellhebel 40 hier über das obere Ende des Standrohres 2 hinaussteht und von dem Fahrer als Bedienperson während der Fahrt bedienbar ist. Dazu muss der Fahrer nur mit einer Hand zu der Gabelkrone 17 der Gabel 1 hinuntergreifen und kann durch eine Drehbewegung des Einstellhebels 40 zwischen hier drei oder sogar bis zu vier vorgesehenen Umschaltstufen umschalten. In einer bevorzugten Ausgestaltung kann der Einstellhebel 40 als ferngesteuertes Einstellelement ausgebildet sein, welches z. B. über einen Steuermechanismus am Lenker betätigt wird.

In einer ersten Einstellung 41 des Einstellhebels 40 wird die in Fig. 5 dargestellte Situation erzielt, in der sowohl das Sperrventil 24 der Zugstufe als auch das Sperrventil 25 der Druckstufe nicht aktiviert sind, sodass ein freier Durchfluss durch die Ventile 24 und 25 möglich ist. Dies ist der normale Betriebszustand der Federgabel 1, in der sowohl eine Zugstufendämpfung als auch eine Druckstufendämpfung und eine Einfederung und eine Ausfederung möglich ist.

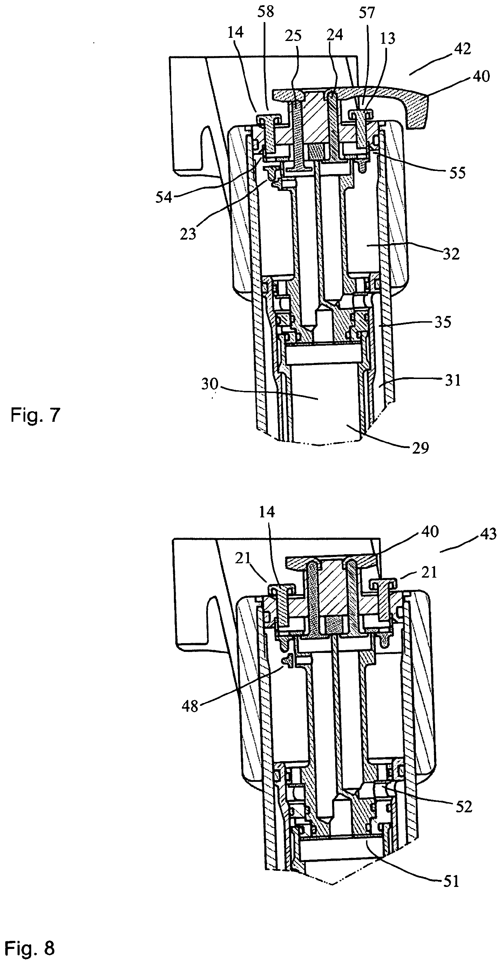

Durch eine Drehbewegung des Einstellhebels 40 von der Position 41 in die zweite Drehposition 42, die in Fig. 7 dargestellt ist, wird das Sperrventil 24 der Zugstufe aktiviert und somit verschlossen, sodass in der Zugstufe im Wesentlichen kein Durchfluss mehr möglich ist. In der Druckstufe ist das Sperrventil 25 immer noch geöffnet. Das bedeutet, dass ein Einfedern noch möglich ist, während ein anschließendes Ausfedern unterbunden wird. Eine solche Drehposition 42 des Einstellhebels 40 ist beispielsweise sinnvoll, wenn der Fahrer eine starke Steigung hochfährt und den Neigungswinkel des Fahrrads verringern möchte. Durch das Einfedern der Vorderradgabel verringert sich dessen effektive Höhe, sodass eine sichere und angenehmere Fahrposition erreicht wird. Nach Aktivieren der Schwenkposition 42 durch das Drehen des Einstellhebels 40 bewirkt jeder Schlag und jede Einfederung ein Absenken der Vorderradgabel 1, bis eine vorgesehene Einstellung erreicht wird.

Durch Weiterdrehen des Einstellhebels 40 in die in Fig. 8 dargestellte dritte Umschaltposition 43 wird erreicht, dass nicht nur das Sperrventil 24 für die Zugstufe, sondern auch das Sperrventil 25 für die Druckstufe geschlossen wird. Eine solche Einstellung des Einstellhebels 40 ist zu jedem Zeitpunkt möglich. Dadurch wird direkt ein Ausfedern und auch ein Einfedern der Gabel verhindert. Die Federgabel 1 verhält sich praktisch so, als wenn kein Feder- und Dämpfungssystem vorhanden wäre. Nur bei besonders großen Stößen kann das Blowoff-Ventil 48 aktiviert werden und einen Durchfluss erlauben, um den maximalen im System auftretenden Druck zu begrenzen und einen Defekt oder ein Zerbersten des Dämpfungssystems 10 der Federgabel zu verhindern, wenn beispielsweise mit dem Fahrrad ein Sprung durchgeführt wird, während sich der Einstellhebel in der dritten Umschaltstufe 43 befindet.

Weiter kann es möglich sein, den Einstellhebel 40 in eine vierte Umschaltstufe 44 zu überführen, in der das Sperrventil für die Druckstufe geschlossen ist, während das Sperrventil 24 für die Zugstufe geöffnet ist. Dadurch wird ein Ausfedern der Feder ermöglicht, während ein Einfedern verhindert wird.

Die Federgabel 1 weist weiterhin das schon erwähnte Überströmventil 45 auf, welches in einem Abstand 46 vom unteren Ende der zweiten Kammer 12 vorgesehen ist. Durch die Überströmöffnung 45 wird bei aktiviertem Sperrventil 24 der Zugstufe ein vollständiges Einfedern der Federgabel 1 verhindert.

Es ist ein Verbindungskanal 60 vorgesehen, der über wenigstens eine Strömungsdrossel 63 verfügt. Der Verbindungskanal 60 dient dazu, die Federgabel bei aktiviertem Sperrventil 24 der Zugstufe nach starken Einfedervorgängen langsam automatisch wieder bis auf ein bestimmtes Maß ausfedern zu lassen.

Dazu stellt der Verbindungskanal 60 eine Strömungsverbindung für das Dämpfungsfluid zwischen der zweiten Kammer 12 und der ersten Kammer 11 zur Verfügung, wenn das Standrohr 2 und das damit zusammenwirkende Tauchrohr 4 um mehr als einen vorgegebenen Abstand 46 eingefedert sind. Dadurch wird bei stärkerem Einfedern und aktiviertem Sperrventil 24 der Zugstufe ein langsames Ausfedern bis zu einer durch den vorgegebenen Abstand 46 definierten Dämpferstellung 68 ermöglicht.

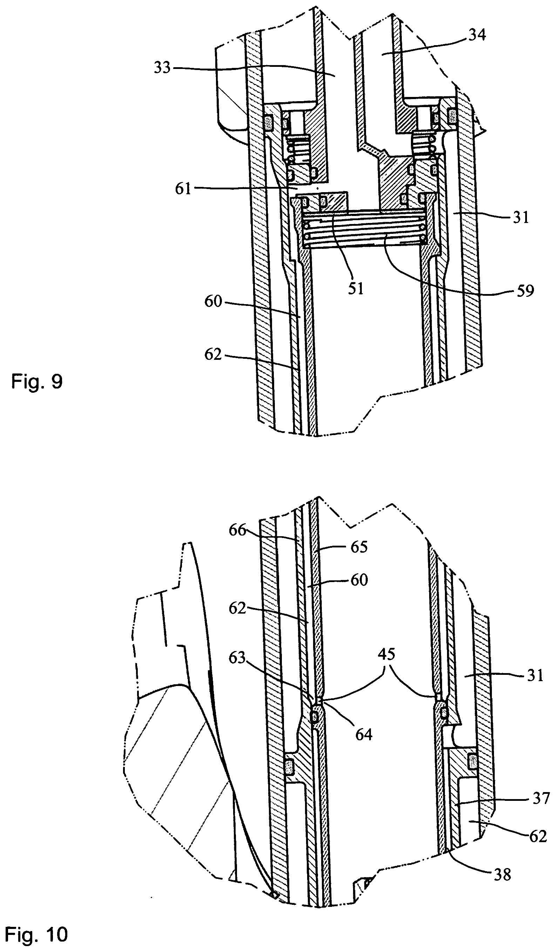

Die Ausgestaltung des Überströmventils oder der Überströmöffnung 45 ist vergrößert in den Figuren 9 und 10 dargestellt. Zwischen etwa 20 und 50 % des Einfederwegs ist wenigstens eine Überströmöffnung 45 an der Dämpfungskammer 10 vorgesehen. Die Überströmöffnung 45 weist den Abstand 46 von unten auf, während der maximale Hub der Länge 47 entspricht. Die wenigstens eine Überströmöffnung 45 ist hier über den als Ringkanal 62 ausgebildeten Kanal mit der Öffnung 61 verbunden, die hier in die Steigleitung 33 mündet. Dadurch kann Dämpfungsfluid aus der Kammer 12 direkt in die Steigleitung 33 und somit wieder in die Kammer 11 eintreten. Das Dämpfungsfluid kann aus der Kammer 12 über die Überströmöffnung 45 in den Kanal 60 und weiter über die Öffnung 61 in die Steigleitung 33 und von da in die erste Kammer 11 übertreten, sodass die Federgabel wieder ausfedert, bis der Kolben die Überströmöffnung 45 wieder verschließt.

Die Strömungsdrossel 63 wird hier insbesondere durch die Überströmöffnung 45 oder durch die Überströmöffnungen 45 gebildet, wenn mehrere vorhanden sind. Der Strömungsquerschnitt 64 der Strömungsdrossel 63 wird durch die freie Durchgangsfläche der Überströmöffnung 45 (oder durch die Summe der einzelnen Flächen der Überströmöffnungen 45) gebildet. Hier ist der Strömungsquerschnitt 64 jedenfalls erheblich kleiner als der halbe maximale Strömungsquerschnitt der Drosseleinrichtung 58 bzw. des Drosselventils 14 für die Druckstufe.

Das Verhältnis des Strömungsquerschnitts 64 der Strömungsdrossel 63 zu dem maximalen Strömungsquerschnitt der Drosseleinrichtung 58 für die Druckstufe ist insbesondere kleiner als 1:3 und vorzugsweise kleiner als 1:5 und besonders bevorzugt kleiner als 1:8. Werte von 1:10 oder 1:20 und insbesondere auch 1:30 sind möglich und bevorzugt. Die Fläche ist insbesondere so bemessen, dass der Verbindungskanal 60 in geöffnetem Zustand das Dämpfungsverhalten der Federgabel nur gering beeinflusst.

Das Gleiche gilt vorzugsweise auch für das Verhältnis des Strömungsquerschnitts 64 der Strömungsdrossel 63 zu dem maximalen Strömungsquerschnitt der Drosseleinrichtung 50 für die Zugstufe.

Der Ringspalt 62 wird durch ein Innenrohr 65 und ein Mittelrohr 66 begrenzt, welche beide konzentrisch innerhalb des Standrohres angeordnet sind.

In anderen Ausgestaltungen kann der Verbindungskanal über z. B. ein steuerbares Ventil absperrbar sein.

In anderen Ausgestaltungen kann der Kanal 60 über eine Öffnung 61 auch direkt in die Niederdruckkammer 32 münden (Variante nicht abgebildet). So kann eine Federgabel auf unterschiedliche Betriebsweisen eingestellt werden. Die Federgabel kann komplett starr eingestellt werden. Die Federgabel kann z. B. für Bergfahrten auch um einen bestimmten Anteil eingefedert werden.

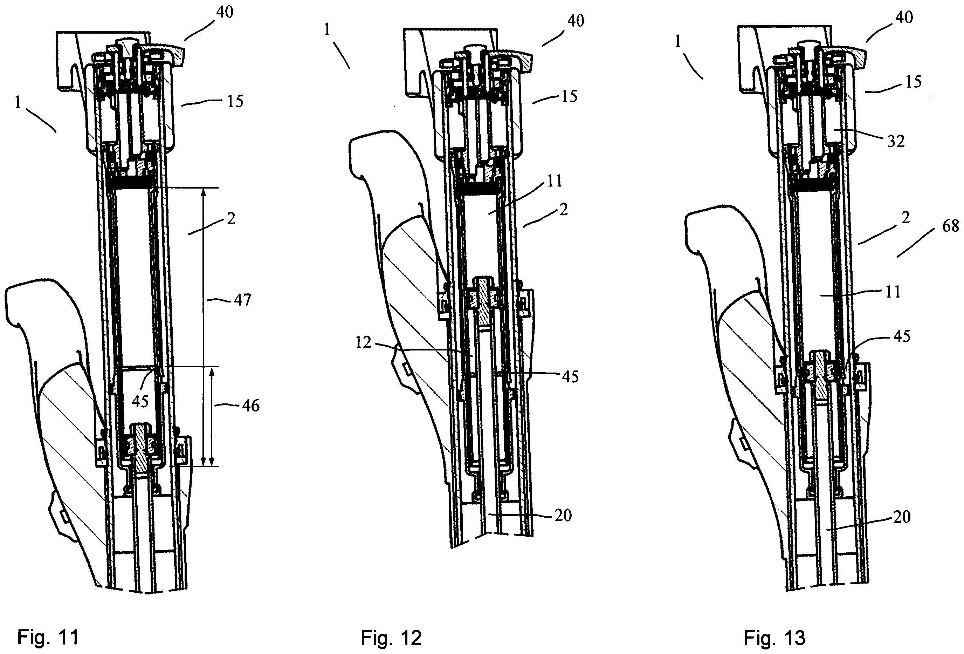

Die Funktions- und Wirkungsweise des Überströmventils 45 wird nun mit Bezug auf die Fig. 11 bis 13 erläutert.

Dabei befindet sich in der Darstellung gemäß Fig. 11 die Federgabel 1 im ausgefederten Zustand, wobei das Sperrventil 24 der Zugstufe aktiviert ist, um ein Einfedern der Federgabel 1 zu ermöglichen, während ein Ausfedern im Wesentlichen verhindert wird.

Nach Aktivierung des Sperrventils 24 durch Überführen des Einstellhebels 40 in die zweite Umschaltstufe 42 wird die Steigleitung 34 für die Zugstufe verschlossen. Die während der Fahrt auftretenden Stöße bewirken ein Absenken der Federgabel 1, bis die Federgabel beispielsweise die in Fig. 13 dargestellte Stellung erreicht hat, in der der Kolben 9 bis zu der Überströmöffnung 45 eingefedert ist.

Wenn nun in dieser Stellung ein weiterer starker Stoß auf die Federgabel 1 einwirkt, wird die Federgabel weiter über die Überströmöffnung 45 hinaus einfedern (vgl. Fig. 12). Dadurch wird die Überströmöffnung 45 frei gegeben, sodass die sperrende Wirkung des Sperrventils 24 umgangen wird. Der Verbindungskanal 60 verbindet die zweite Kammer 12 mit der ersten Kammer 11 und die Federgabel wird automatisch langsam abgesenkt. Der Austausch des Dämpfungsfluids erfolgt langsam, da der Strömungsquerschnitt 64 der als Strömungsdrossel 63 dienenden Überströmöffnung 45 klein ist.

Durch die Überströmöffnung 45 bedingt kann die Federgabel 1 wieder ausfedern, bis sich der in Fig. 13 dargestellte Zustand ergibt, in der die Überströmöffnung 45 wieder verschlossen wird.

Insgesamt wird durch die Überströmöffnung 45 trotz aktiviertem Sperrventil 24 ein System zur Verfügung gestellt, welches den Federweg auch bei aktiviertem Sperrventil 24 der Zugstufe begrenzt. Durch die Anordnung der Überströmöffnung 45 kann der gewünschte Federweg eingestellt werden.

Damit wird eine Funktion zur Verfügung gestellt, die bei Bergauffahrten das nötige Einfedern zur Verfügung stellt, während andererseits weiterhin eine geringe Dämpfungsfunktion zur Verfügung stellt.

Wenn mehrere einstellbare oder schaltbare Überströmöffnungen 45 in unterschiedlichen Höhen vorgesehen werden, kann der bei aktiviertem Sperrventil 24 noch zur Verfügung stehende Federweg entsprechend eingestellt werden.

Die Figuren 14 bis 16 zeigen Querschnitte durch eine weitere Ausführungsform einer erfindungsgemäßen Federgabel 1. Gleiche oder ähnliche Bauteile werden mit den gleichen Bezugszeichen versehen. Das Dämpfungssystem 8 ist wiederum in ein Standrohr 2 oder 3 einer Federgabel 1 eingesetzt, so wie es in Fig. 1 gezeigt ist.

Im Unterschied zum vorangegangenen Ausführungsbeispiel ist in dem Ausführungsbeispiel nach den Figuren 14 bis 16 das Drosselventil 13 als Lowspeed-Drosselventil für die Zugstufe am oberen Ende der Dämpfungskammer 10 vorgesehen. Auch das Drosselventil 14 als Lowspeed-Drosselventil für die Druckstufe ist am oberen Ende der Dämpfungskammer 10 angeordnet. Die Ventile trennen den Hochdruckbereich von dem Niederdruckbereich. Der Steuerabschnitt 15 erstreckt sich praktisch von dem oberen Ende der ersten Kammer 11 bis zum oberen Ende 16 des Standrohrs 2.

Die Drosselventile 13 (Lowspeed) für die Zugstufe und 14 (Lowspeed) für die Druckstufe sind über entsprechende Steuerelemente bzw. Steuerstifte mit dem oberen Ende 16 verbunden und können durch Betätigung des Einstellteils 40 eingestellt werden.

In Fig. 14 ist erkennbar, dass der Steuerstift 73 auf das Sperrventil 24 für die Zugstufe einwirkt, sodass bei Bedarf der Lockout aktiviert werden und die Zugstufendämpfung blockiert werden kann. Ein Steuerstift 75 wirkt auf das Sperrventil 25 für die Druckstufe ein und kann wahlweise die Druckstufendämpfung blockieren. Bei besonders starken Stößen öffnet das Blowoff-Ventil 48, wenn die Stöße eine Kraft erzeugen, die die Spannkraft der Feder 74 des Blowoff-Ventils 48 übersteigt.

Das das Blowoff-Ventil 48 ist über Dichtungen 77 jeweils gegenüber dem Steuerstift 76 und der äußeren Wandung abgedichtet ist.

Das High-Speed-Drosselventil 23 ist hier parallel zu dem Low-Speed-Drosselventil 14 geschaltet.

Oberhalb der Sperrventil 24 und 25 wird der Ölausgleichsraum 72 über eine Trennwandung von einem Gasvolumen 79 getrennt. Die Trennwandung ist hier als Gummischlauch 70 ausgeführt und stellt eine zuverlässige Trennung des Öls von dem Gasvolumen sicher. Das Gasvolumen 79 steht unter einem Überdruck, der typischerweise zwischen 1 und 5 bar beträgt. Der bewegliche Kolben 9 ist hier als undurchlässiger Pumpkolben ausgeführt. Wenn der bewegliche Kolben 9 eintaucht, wird das dem Öl zur Verfügung stehende Volumen reduziert. Dadurch wird das Gasvolumen 79 durch den flexiblen Gummischlauch 70 entsprechend komprimiert und der Ausgleichsraum 72 entsprechend vergrößert.

Der O-Ring 71 deckt eine Bohrung ab. Der O-Ring 71 dient zusammen mit der Bohrung als Einwegventil und dient zum Befüllen mit Gas nach der Montage der Federgabel. Das Einwegventil öffnet, wenn der Innendruck den O-Ring soweit aufdehnt, bis Gas durch den entstehenden Spalt austreten kann.

In Fig. 15 ist ein weiterer Querschnitt durch den Steuerabschnitt 15 gezeigt, wobei Fig. 15 einen etwa quer zu dem Querschnitt nach Fig. 14 angeordneten Querschnitt zeigt.

Erkennbar ist das Drosselventil 13 als Low-Speed-Regelventil für die Zugstufe. Über eine Längsverstellung wird der Regelspalt 69 reguliert und somit der Durchflusswiderstand eingestellt.

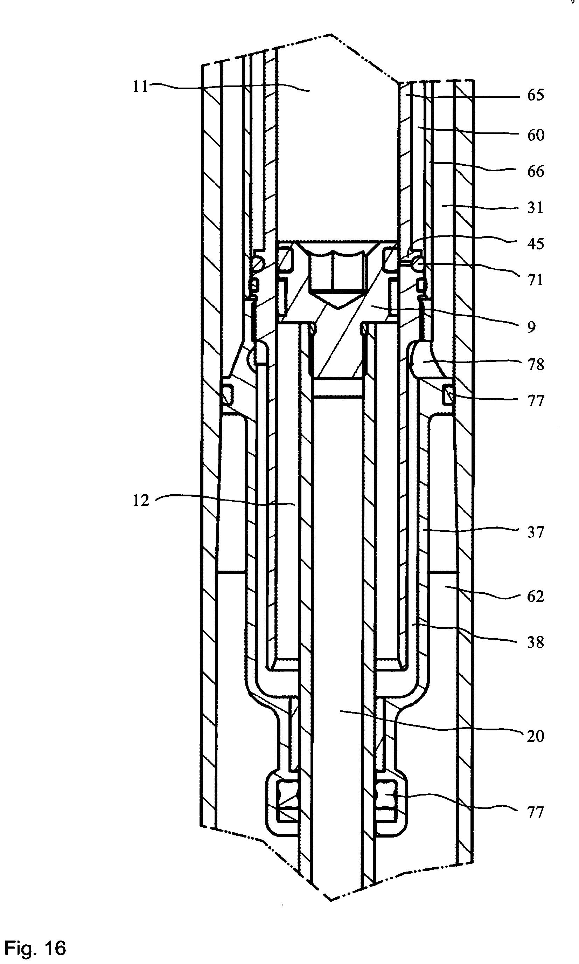

Fig. 16 zeigt einen Querschnitt durch den Bereich des Kolbens im untere Bereich der Dämpfungskammer, dort wo wie im vorausgegangenen Ausführungsbeispiel die Überströmöffnung 45 vorgesehen ist.

Die Kolbenstange 20 ist über eine Dichtung 77 gegenüber der Dämpferkammer 10 abgedichtet. Am oberen Ende der Kolbenstange 20 ist der bewegliche Kolben 9, der als Pumpkolben ausgeführt ist, und der die erste Kammer 11 von der zweiten Kammer 12 trennt.

Die zweite Kammer 12 geht unten in den damit verbundenen Zwischenraum 38 über. Nach außen wird die zweite Kammer 12 bzw. der Niederdruckbereich dort durch das Zwischenrohr 37 begrenzt, welches mit einer Dichtung 77 nach außen zu dem Standrohr abgedichtet ist. Der Zwischenraum 38 ist am oberen Ende radial nach außen über mindestens eine Öffnung 78 mit der Außenkammer 31 verbunden. Die zweite Kammer 12 bildet mit dem Zwischenraum 38 und der Außenkammer zusammen die Zugstufenkammer.

Radial innerhalb der Außenkammer 31 ist das Mittelrohr 66 vorgesehen, in welchem hier konzentrisch das Innenrohr 65 angeordnet ist. Zwischen dem Innenrohr 65 und dem Mittelrohr 66 ist ein Kanal 60 vorgesehen. Von dem Kanal 60 mündet eine Öffnung 61 im oberen Bereich in die erste Kammer 11 und eine Öffnung 45 im unteren Bereich in die Dämpfungskammer 10. Dadurch kann der Kanal 60 einen Bypass zwischen der ersten Kammer 11 und der zweiten Kammer 12 darstellen, wenn sich der bewegliche Kolben 9 zwischen der den Öffnungen 45 und 61 befindet. Dadurch kann auch bei blockierter Dämpfung ein Austausch stattfinden. Der Austausch ist langsam, da die Strömungsquerschnitte der Öffnungen bewusst klein gewählt wurden.

Um die Durchflussmengen durch die Überströmöffnungen 45 und 61 noch weiter zu reduzieren, können über den Überströmöffnungen 45 und 61 O-Ringe 71 vorgesehen sein. Dadurch wird erreicht, dass erst ein bestimmter Druck überwunden werden muss, was den Durchfluss weiter bremst und somit die normale Funktion möglichst wenig einschränkt. Es hat sich nämlich gezeigt, dass die Überströmöffnungen 45 und 61 sehr klein sein sollten. Und auch bei kleinen Öffnungen ist es sinnvoll, den Durchfluss noch weiter zu reduzieren.

Ein erheblicher Vorteil der Überstromöffnungen 45 und 61 und es dadurch bereitgestellten Bypasses ist auch, dass unabhängig von dem Gewicht des Fahrers auch bei gesperrter Zugstufe immer die gleiche Position eingestellt wird. Diese Position ist unabhängig von der einwirkenden Kraft, sondern wird durch die Position der Bohrung definiert. Das ist sehr vorteilhaft, da dadurch für alle Fahrer die gleiche Position eingestellt wird, was insbesondere bei steilen Bergauffahrten sehr günstig ist.

Es folgt eine kurze Beschreibung der Funktion: In der Druckstufe, d.h. beim Einfedern und bei geöffneten Sperrventilen 24 und 25.

Als Folge eines Stoßes fährt der als Pumpkolben ausgeführte bewegliche Kolben 9 nach oben und der Druck in der ersten Kammer 11 oberhalb des Kolbens 9 steigt an. Das Öl wird dann über das Drosselventil 14 (Druckstufenventil Low-speed) nach oben fließen.

Das Drosselventil 23 ist durch eine Feder vorbelastet, sodass bei geringen Belastungen ein Shim das Drosselventil 23 abdichtet. Ab einer bestimmten Belastung bzw. einem entsprechenden Überdruck öffnet zusätzlich das High-Speed-Drosselventil 23 der Druckstufe, so dass die Drosselventile 14 und 23 parallel geöffnet sind. Das Öl fließt nach oben in den Ölausgleichsraum 72 am oberen Ende des Standrohres. Der als Ringkammer ausgebildete Ölausgleichsraum 72 ist zwischen der Standrohrwandung und dem flexiblen Gummischlauch 70 gebildet. Der Gummischlauch 70 wird durch das in den Ölausgleichsraum 72 einfließende Öl komprimiert. Im Inneren des Gummischlauches 70 ist ein Gasvolumen 79 vorhanden. Das Gasvolumen 79 ist hier mit Luft gefüllt und im vorliegendem Fall unter einen Druck von z.B. 3-4 Bar gesetzt. Dadurch wird zuverlässig Kavitation in dem strömenden Öl vermieden. Durch den Gummischlauch und das Gasvolumen wird das Volumen der Kolbenstange ausgeglichen. Und auch bei Wärmeausdehnung des Öls steht ein entsprechendes Reservoir zur Verfügung.

Beim Einfedern sinkt gleichzeitig in der zweiten Kammer 12 unterhalb des beweglichen Kolbens 9 der Druck. Die zweite Kammer steht unten in Strömungsverbindung mit dem Zwischenraum 38 und der Außenkammer 31, von wo nun Öl angesaugt wird. Die Außenkammer 31 grenzt an den Steuerabschnitt 15. Dort öffnet ein Rücklaufventil und Öl fließt von oben aus dem Ölausgleichsraum 72 ab.

Beim Ausfedern in der Zugstufe fährt der bewegliche Kolben 9 nach unten und es bildet sich in der unteren zweiten Kammer 12 und somit auch in der Außenkammer 31 ein Überdruck, während in der ersten Kammer 11 oberhalb des Kolbens 9 ein Unterdruck entsteht. Durch der Unterdruck in der ersten Kammer 11 öffnet wenigstens ein am oberen Ende angeordnetes Rückschlagventil und es wird Öl von oben aus dem Ölausgleichraum 72 angesaugt.

Insgesamt stellt die erfindungsgemäße Federgabel 1 ein System bereit, welches eine hohe Wärmeableitung im oberen Bereich der Standrohre 2, 3 ermöglicht, wobei alle Bedienelemente 21, 40 flexibel in einem oberen Bereich 16 der Standrohre 2 und 3 angeordnet werden können.

In allen Ausgestaltungen kann wenigstens ein Sperrventil 24 oder 25 und/oder wenigstens ein Drosselventil 13 oder 14 elektrisch oder magnetisch betätigbar oder aktivierbar sein. Insbesondere ist auch eine fernsteuerbare Ausführung möglich und bevorzugt. Möglich ist z. B.eine Betätigung vom Lenker aus. Bevorzugt ist auch eine mechanische Fernsteuerung.

Weiterhin befinden sich auch die Drosselventile 13, 14, 22 - 25 im oberen Bereich 16 der Standrohre 2 oder 3 und es kann über einen gemeinsamen an der Gabelkrone 27 oder an dem Standrohr 2, 3 vorgesehenen Einstellhebel 40 sowohl ein Zugstufen-Lockout (gesperrtes Zugstufen-Sperrventil) als auch ein Druckstufen-Lockout (gesperrtes Druckstufen-Sperrventil) eingestellt werden, sodass die Gabel 1 sowohl in Einfederrichtung als auch in Ausfederrichtung starr wird. Gleichzeitig kann auch bei aktiviertem Zugstufen-Lockout über ein Überströmventil 45 eine Dämpfungsfunktion gewährleistet werden.

**Bezugszeichenliste:**

| | | | |
|---|---|---|---|
| 1 | Federgabel | 41 | erste Drehposition |
| 2 | Standrohr | 42 | zweite Drehposition |
| 3 | Standrohr | 43 | dritte Drehposition |
| 4 | Tauchrohr | 44 | vierte Drehposition |
| 5 | Tauchrohr | 45 | Überströmöffnung |
| 6 | Radaufnahmeraum | 46 | Abstand |
| 7 | Verbindungsteil | 47 | Länge |
| 8 | Dämpfungssystem | 48 | Blowoff-Ventil |
| 9 | beweglicher Kolben | 49 | Dichtung |
| 10 | Dämpfungskammer | 50 | Federsystem |
| 11 | erste Kammer | 51 | Rückschlagventil |
| 12 | zweite Kammer | 52 | Rückschlagventil |
| 13 | Drosselventil | 53 | Kolbenführung |
| 14 | Drosselventil | 54 | radiale Bohrung |
| 15 | Steuerabschnitt | 55 | radiale Bohrung |
| 16 | oberes Ende | 56 | Verbindungsbügel |
| 17 | unteres Ende | 57 | Drosseleinrichtung |
| 18 | Ausfallende | 58 | Drosseleinrichtung |
| 19 | Ausfallende | 59 | Feder |
| 20 | Kolbenstange | 60 | Kanal |
| 21 | Einstellelement | 61 | Öffnung |
| 22 | High-Speed-Drosselventil | 62 | Ringspalt |
| 23 | High-Speed-Drosselventil | 63 | Strömungsdrossel |
| 24 | Sperrventil | 64 | Strömungsquerschnitt |
| 25 | Sperrventil | 65 | Innenrohr |
| 26 | Gabelschaft | 66 | Mittelrohr |
| 27 | Gabelkrone | 68 | Dämpferstellung |
| 29 | Hochdruckkammer | 69 | Regelspalt |
| 30 | Innenkammer | 70 | Gummischlauch |
| 31 | Außenkammer | 71 | O-Ring |
| 32 | Niederdruckkammer | 72 | Ölausgleichsraum |
| 33 | Steigleitung | 73 | Steuerstift |
| 34 | Steigleitung | 74 | Feder |
| 35 | Rückkanal | 75 | Steuerstift |
| 36 | unterer Bereich | 76 | Steuerstift |
| 37 | Zwischenrohr | 77 | Dichtung |
| 38 | Zwischenraum | 78 | Öffnung |
| 39 | Wandung | 79 | Gasvolumen |
| 40 | Einstellteil | | |

## Patentansprüche

1. Federgabel (1) für ein Fahrrad, umfassend zwei Standrohre (2, 3) und zwei damit zusammenwirkende Tauchrohre (4, 5) und einen Radaufnahmeraum (6) dazwischen, sowie ein Dämpfungssystem (8), wobei das Dämpfungssystem (8) wenigstens eine durch einen beweglichen Kolben (9) in eine erste Kammer (11) und in eine zweite Kammer (12) geteilte Dämpfungskammer (10) und eine Drosseleinrichtung (13) für die Zugstufendämpfung und eine Drosseleinrichtung (14) für die Druckstufendämpfung aufweist,
**dadurch gekennzeichnet,**
**dass** das Dämpfungssystem (8) an dem Standrohr (2, 3) angeordnet ist, und dass die Drosseleinrichtung (57) für die Zugstufendämpfung und die Drosseleinrichtung (58) für die Druckstufendämpfung oberhalb des beweglichen Kolbens (9) angeordnet sind.

2. Federgabel (1) nach Anspruch 1, wobei ein Steuerabschnitt (15) oberhalb der Dämpfungskammer (10) vorgesehen ist, an welchem die Drosseleinrichtung (57) für die Zugstufendämpfung und die Drosseleinrichtung (58) für die Druckstufendämpfung angeordnet sind.

3. Federgabel (1) nach Anspruch 2, wobei der Steuerabschnitt (15) an die erste Kammer (11) angrenzt und/oder wobei der Steuerabschnitt (15) in der Nähe des oberen Endes (16) des Standrohrs (2, 3) angeordnet ist.

4. Federgabel (1) nach mindestens einem der vorhergehenden Ansprüche, wobei der bewegliche Kolben (9) über eine Kolbenstange (20) mit einem Tauchrohr (4, 5) verbunden ist.

5. Federgabel (1) nach mindestens einem der vorhergehenden Ansprüche, wobei die Drosseleinrichtung (57) für die Zugstufendämpfung als einstellbares Drosselventil (13) und/oder die Drosseleinrichtung (58) für die Druckstufendämpfung als einstellbares Drosselventil (14) ausgebildet ist.

6. Federgabel (1) nach mindestens einem der vorhergehenden Ansprüche, wobei eine Charakteristik des Drosselventils (57) zur Einstellung der Zugstufendämpfung und/oder eine Charakteristik des Drosselventils (58) zur Einstellung der Druckstufendämpfung jeweils im Betrieb über Einstellelemente (21) einstellbar sind.

7. Federgabel (1) nach mindestens einem der vorhergehenden Ansprüche, wobei zusätzlich wenigstens ein High-Speed-Drosselventil (22, 23) für die Zugstufendämpfung und/oder die Druckstufendämpfung vorgesehen ist, dessen Charakteristik insbesondere fest eingestellt ist.

8. Federgabel (1) nach mindestens einem der vorhergehenden Ansprüche, wobei wenigstens ein Sperrventil (24, 25) vorgesehen ist, welches insbesondere über ein Einstellelement (40) in der Nähe des oberen Endes (16) des Standrohres (2, 3) einstellbar ist.

9. Federgabel (1) nach mindestens einem der vorhergehenden Ansprüche, wobei die Einstellelemente (21, 40) in der Nähe des oberen Endes (16) des Standrohrs (2, 3) angeordnet sind.

10. Federgabel (1) nach mindestens einem der vorhergehenden Ansprüche, wobei das Tauchrohr (2, 3) wenigstens teilweise aus einem Faserverbundwerkstoff besteht.

11. Federgabel (1) nach mindestens einem der vorhergehenden Ansprüche, wobei das Standrohr (2, 3) wenigstens teilweise aus Metall besteht.

12. Federgabel (1) nach mindestens einem der vorhergehenden Ansprüche 3 bis 11, wobei die Dämpfungskammer (10) als Hochdruckkammer (29) ausgebildet ist und wobei der Steuerabschnitt (15) eine Niederdruckkammer (32) aufweist.

13. Federgabel (1) nach mindestens einem der vorhergehenden Ansprüche 3 bis 12, wobei die zweite Kammer (12) über einen Rückkanal (35) und den Steuerabschnitt (15) mit der ersten Kammer (11) verbunden ist, wobei den Rückkanal (35) insbesondere die Außenkammer (31) bildet.

14. Federgabel (1) nach mindestens einem der vorhergehenden Ansprüche, wobei in einem unteren Bereich (36) der zweiten Kammer (12) die Innenkammer (30) von einem Zwischenrohr (37) umgeben ist, wobei dort der Zwischenraum (38) zwischen der Wandung (39) der zweiten Kammer (12) und des Zwischenrohrs (37) die Außenkammer (31) bildet.

15. Federgabel (1) nach mindestens einem der vorhergehenden Ansprüche, wobei die Standrohrinnenseite wenigstens abschnittsweise eine Kontaktfläche für das Dämpfungsmedium ist.

## Claims

1. A suspension fork (1) for a bicycle, comprising two stanchion tubes (2, 3) and two slider tubes (4, 5) interacting therewith and a wheel receiving space (6) in-between, as well as a damper system (8), wherein the damper system (8) comprises at least one damper chamber (10) divided into a first chamber (11) and a second chamber (12) by means of a movable piston (9) and a damping device (13) for rebound damping and a damping device (14) for compression damping, **characterized in that** the damper system (8) is disposed at the stanchion tube (2, 3) and that the damping device (57) for rebound damping and the damping device (58) for compression damping are disposed above the movable piston (9).

2. The suspension fork (1) according to claim 1 wherein above the damper chamber (10) a control section (15) is provided at which the damping device (57) for rebound damping and the damping device (58) for compression damping are disposed.

3. The suspension fork (1) according to claim 2 wherein the control section (15) is adjacent to the first chamber (11) and/or wherein the control section (15) is disposed in the vicinity of the upper end (16) of the stanchion tube (2, 3).

4. The suspension fork (1) according to at least one of the preceding claims wherein the movable piston (9) is connected with a slider tube (4, 5) via a piston rod (20).

5. The suspension fork (1) according to at least one of the preceding claims wherein the damping device (57) for rebound damping is configured as an adjustable damper valve (13) and/or the damping device (58) for compression damping is configured as an adjustable damper valve (14).

6. The suspension fork (1) according to at least one of the preceding claims wherein a characteristic of the damper valve (57) for adjusting rebound damping and/or a characteristic of the damper valve (58) for adjusting compression damping are each adjustable in operation through adjusting elements (21).

7. The suspension fork (1) according to at least one of the preceding claims wherein additionally at least one high-speed damper valve (22, 23) for rebound damping and/or compression damping is provided whose characteristic is in particular fixedly set.

8. The suspension fork (1) according to at least one of the preceding claims wherein at least one shut-off valve (24, 25) is provided which is adjustable in particular via an adjusting element (40) in the vicinity of the upper end (16) of the stanchion tube (2, 3).

9. The suspension fork (1) according to at least one of the preceding claims wherein the adjusting elements (21, 40) are disposed in the vicinity of the upper end (16) of the stanchion tube (2, 3).

10. The suspension fork (1) according to at least one of the preceding claims wherein the slider tube (2, 3) consists of a fibrous composite material at least in part.

11. The suspension fork (1) according to at least one of the preceding claims wherein the stanchion tube (2, 3) consists of a metal at least in part.

12. The suspension fork (1) according to at least one of the preceding claims 3 to 11 wherein the damper chamber (10) is configured as a high pressure chamber (29) and wherein the control section (15) comprises a low pressure chamber (32).

13. The suspension fork (1) according to at least one of the preceding claims 3 to 12 wherein the second chamber (12) is connected with the first chamber (11) through a return channel (35) and the control section (15) wherein the return channel (35) in particular forms the external chamber (31).

14. The suspension fork (1) according to at least one of the preceding claims wherein in a lower region (36) of the second chamber (12) the internal chamber (30) is enclosed by a center tube (37) wherein the gap (38) between the wall (39) of the second chamber (12) and the center tube (37) forms the external chamber (31).

15. The suspension fork (1) according to at least one of the preceding claims wherein the inside of the stanchion tube is a contact surface for the damping medium at least in sections.

## Revendications

1. Fourche à ressort (1) pour une bicyclette, comprenant deux tubes fixes (2, 3) et deux tubes plongeurs (4, 5) agissant de concert avec ceux-ci et un espace de logement de roue (6) situé entre ceux-ci ainsi qu'un système d'amortissement (8), dans laquelle le système d'amortissement (8) présente au moins une chambre d'amortissement (10) divisée par un piston mobile (9) en une première chambre (11) et en une deuxième chambre (12) ainsi qu'un dispositif d'étranglement (13) pour l'amortissement de l'étage de traction et un dispositif d'étranglement (14) pour l'amortissement de l'étage de compression,
**caractérisée par le fait que** le système d'amortissement (8) est disposé sur le tube fixe (2, 3) et que le dispositif d'étranglement (57) pour l'amortissement de l'étage de traction et le dispositif d'étranglement (58) pour l'amortissement de l'étage de compression sont disposés au-dessus du piston mobile (9).

2. Fourche à ressort (1) selon la revendication 1, dans laquelle une section de commande (15) est prévue au-dessus de la chambre d'amortissement (10), sur laquelle sont disposés le dispositif d'étranglement (57) pour l'amortissement de l'étage de traction et le dispositif d'étranglement (58) pour l'amortissement de l'étage de compression.

3. Fourche à ressort (1) selon la revendication 2, dans laquelle la section de commande (15) est contiguë à la première chambre (11) et/ou dans laquelle la section de commande (15) est disposée à proximité de l'extrémité supérieure (16) du tube fixe (2, 3).

4. Fourche à ressort (1) selon l'une au moins des revendications précédentes, dans laquelle ledit piston mobile (9) est relié par une tige de piston (20) à un tube plongeur (4, 5).

5. Fourche à ressort (1) selon l'une au moins des revendications précédentes, dans laquelle ledit dispositif d'étranglement (57) pour l'amortissement de l'étage de traction est réalisé en tant que soupape d'étranglement (13) réglable et/ou ledit dispositif d'étranglement (58) pour l'amortissement de l'étage de compression est réalisé en tant que soupape d'étranglement (14) réglable.

6. Fourche à ressort (1) selon l'une au moins des revendications précédentes, dans laquelle une caractéristique de la soupape d'étranglement (57) pour le réglage de l'amortissement de l'étage de traction et/ou une caractéristique de la soupape d'étranglement (58) pour le réglage de l'amortissement de l'étage de compression peuvent être réglées chacune en fonctionnement par l'intermédiaire d'éléments de réglage (21).

7. Fourche à ressort (1) selon l'une au moins des revendications précédentes, dans laquelle on prévoit en sus au moins une soupape d'étranglement de haute vitesse (22, 23) pour l'amortissement de l'étage de traction et/ou pour l'amortissement de l'étage de compression, dont la caractéristique est réglée en particulier de manière fixe.

8. Fourche à ressort (1) selon l'une au moins des revendications précédentes, dans laquelle au moins une soupape d'arrêt (24, 25) est prévue qui est réglable en particulier par l'intermédiaire d'un élément de réglage (40) à proximité de l'extrémité supérieure (16) du tube fixe (2, 3).

9. Fourche à ressort (1) selon l'une au moins des revendications précédentes, dans laquelle les éléments de réglage (21, 40) sont disposés à proximité de l'extrémité supérieure (16) du tube fixe (2, 3).

10. Fourche à ressort (1) selon l'une au moins des revendications précédentes, dans laquelle le tube plongeur (4, 5) est réalisé au moins en partie à partir d'un matériau composite renforcé par des fibres.

11. Fourche à ressort (1) selon l'une au moins des revendications précédentes, dans laquelle le tube fixe (2, 3) est réalisé au moins en partie à partir de métal.

12. Fourche à ressort (1) selon l'une au moins des revendications précédentes 3 à 11, dans laquelle la chambre d'amortissement (10) est réalisée en tant que chambre à haute pression (29) et dans laquelle la section de commande (15) présente une chambre à basse pression (32).

13. Fourche à ressort (1) selon l'une au moins des revendications précédentes 3 à 12, dans laquelle la deuxième chambre (12) est reliée via un canal de retour (35) et ladite section de commande (15) à la première chambre (11), ledit canal de retour (35) formant en particulier la chambre extérieure (31).

14. Fourche à ressort (1) selon l'une au moins des revendications précédentes, dans laquelle, dans une zone inférieure (36) de la deuxième chambre (12), la chambre intérieure (30) est entourée d'un tube intermédiaire (37), l'espace intermédiaire (38) entre la paroi (39) de la deuxième chambre (12) et du tube intermédiaire (37) formant là la chambre extérieure (31).

15. Fourche à ressort (1) selon l'une au moins des revendications précédentes, dans laquelle la face intérieure du tube fixe est au moins par sections une surface de contact pour le milieu d'amortissement.
